# EUROPEAN PATENT APPLICATION

(11) **EP 1 391 235 A2**
(43) Date of publication of application: **25.02.2004**
(21) Application number: 03006921.5
(22) Date of filing: 26.03.2003
(51) Int. Cl.: B01D 71/02, C25D 11/04, H01M 8/02, C22F 1/04

(54) **Process for manufacturing a porous alumina membrane for fuel cells**

(30) Priority: 15.04.2002 EP 02008530
(71) Applicant: Becromal S.p.A., I-20089 Quinto de' Stampi Rozzano (MI) (IT)
(72) Inventor: Chiavarotti, Giovanni Pietro, 20152 Milano (IT); Sunseri, Carmelo, 90129 Palermo (IT); Gullo, Umberto, 90129 Palermo (IT); Di Quarto, Francesco, 90011 Bagheria (PA) (IT); Bocchetta, Patrizia, 91026 Mazara del Vallo (IT)
(74) Representative: KEIL & SCHAAFHAUSEN

(57) **Abstract**

A Process for manufacturing a porous body, in particular suitable as a membrane, e.g. for use in a fuel cell, is described. To provide membranes with high inertia having high porosity and big pore diameters the process comprises the following steps:
a) providing a thin substrate having the geometrical base of the body which is to be produced,
b) providing an alumina film by an electrochemical process on the substrate,
c) separation of the substrate from the alumina film and
d) drying and chemical etching of the alumina film,
wherein the substrate used is made of recrystallized material. Further, membranes produced with this process are described.

## Description

The invention relates to a process for manufacturing a porous body, in particular suitable as a membrane, e.g. for use in a fuel cell, and a respective membrane.

Chemical processes that use permeable membranes have become more and more important at industrial level during operations concerning the separation and purification of chemical mixtures. These processes, which are more and more widespread operations in various industrial processes, are dialysis, reverse osmosis, electro dialysis, gas separation, for example. The choice of the material forming the membrane is of particular importance in these sectors because it must provide suitable requirements as for porosity, number of holes, diameters, etc. but also be inert chemically, and in certain cases it must be able to operate in a wide range of temperature and pH. Most of the membranes use mainly synthetic material formed by polysulphonates and polyamide. However, these membranes are not inert enough for many applications.

US 4,859,228 discloses a porous anodic aluminium oxide film made by anodizing one or more aluminium metal anodes of suitable area in an electrolyte based on phosphoric acid maintained at a temperature in the range 5° - 50° C. After separation from the metal substrate, the films have intersecting properties for use in filters. Similar membranes and production processes are disclosed in US 4,687,551, WO 96/01684 und DE 24 44 541 A1. However, the porosity and the average pore diameter of the porous oxide films are for many applications not good enough.

Accordingly, it is an object of the present invention, to provide a porous body for membranes with high inertia which is usable in a wide temperature range having high porosity and big pore diameters.

This object is solved by a process according to the features of claim 1. During the manufacturing process the following steps are performed:
a) providing a thin substrate having the geometrical base of the body which is to be produced,
b) providing an alumina film by an electrochemical process on the substrate,
c) separation of the substrate from the alumina film, and
d) drying and chemical etching of the alumina film.
The substrate used is made of recrystallized material. It has been found that the self ordering of the porous oxide film is highly influenced by the metal structure used as a substrate. If recrystallized metal is used, the porosity as well as the average pore diameter can be increased.

A suitable substrate is e.g. made of annealed aluminium foil. These annealed foils have a high crystallographic orientation along the sides with Miller index (111). For example, the aluminium foils can be annealed by a suitable thermal process at a temperature between about 450°C and 600°C and for a time between about 5 to 35 hours.

This process offers the possibility of producing an alumina membrane in an electrochemical way. Alumina is a ceramic oxide with excellent inert properties which is also resistant to high temperatures. It is formed by a regularity of hexagonal cells with a cylindrical hole in the middle. The uniform distribution of pore diameters and their periodicity give an excellent membrane model. Their manufacture does not imply the use of dangerous expensive substances and the production technique is an electrochemical process of anodic oxidation on specific operation conditions.

As to polymeric membranes, alumina presents many technical and commercial advantages, such as:
- resistance to high temperature and electronic radiation
- supply of rigid surfaces usable as an initial support in order to attain template nanostructures
- attaining porosity by change of the conditions of the electrochemical rise
- possible thickness of 200 µm, so that particles are shifted and not trapped inside the holes.

Further, for the electrochemical deposition of aluminium on the substrate, a galvanic bath is used. The bath temperature should be within a range of about -1°C to about 20°C.

A clear morphological structure will be obtained when the bath temperature is held constant during the aluminium deposition on the substrate.

According to the present invention, the bath should include an approximately 0,1 to 0,6-molar phosphoric acid.

Preferably, the charge density applied to the anode should be in a range up to about 180 Coulomb/cm². It has been found that both the average pore diamater and the porosity increase with higher charge density. The charge density range between 80 to 160 Coulomb/cm² has been found to give very good results.

Further, the anodizing voltage applied can go up to 160 V in order to obtain a clear porous structure.

Advantageously, the substrate is submitted to a cleaning process before anodizing. The cleaning process might be provided by an alkaline bath process or an electro-polishing process.

Especially for the use of these membranes in fuel cells, the proton conductivity is of particular importance for a good functioning of the fuel cell. In this case, the pores of the alumina film are filled with a material having high proton conductivity.

The membrane can be separated from the substrate in a chemical way or an electrochemical process. The use of chemical separation leads to symmetrical membranes. In order to stop the breakdown when metal, solution and border of the cell come into contact with each other, parts of the cell surfaces are covered with inert plastic materials (as e.g. neoprene, teflon, silicone) or with an isolating varnish to limit the anodic surface, and the surface is treated with electro-polishing.

Further features and advantages of the present invention arise from the following description of embodiments and the drawing. All features described and/or shown in the drawing are part of the present invention, irrespective of their combination in the claims and their relation.
- Fig. 1: shows the anodizing current during the tensiodynamic stage of the anodizing process;
- Fig. 2: shows the anodizing current during the tensiostatic stage of the anodizing process;
- Fig. 3: shows a table with the number N, the dimension D of the pores and the porosity P of membranes obtained in a 0,4M H₃PO₄ at 160V and different bath temperatures;
- Fig. 4: shows a table with the number N, the dimension D of the pores and the porosity P of membranes obtained in a 0,4M H₃PO₄ at 160V at different bath temperatures;
- Fig. 5: shows a table reporting the average pore diameter and the porosity for different charge densities;
- Fig. 6: shows the relation between short circiuit current and open circuit voltage.

In the following, a process for manufacturing an alumina membrane is explained in detail.

Initially, the surface of the aluminium substrate is treated with a chemical polish process in 5M KOH for about 15 seconds. Alternatively, the surface can be cleaned by electro-polishing in an EtOH-HClO₄-mixture.

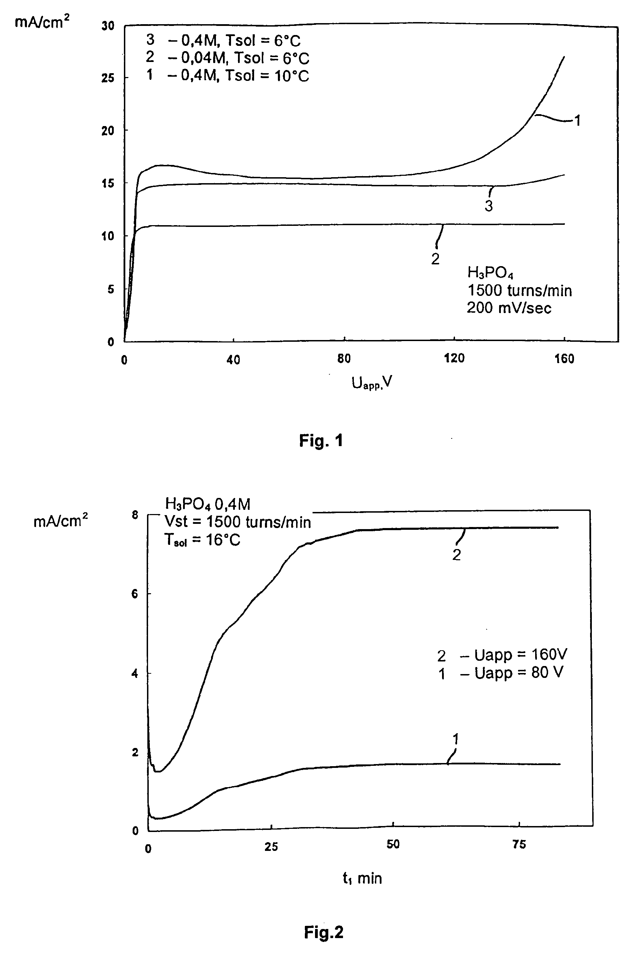

Then, the aluminium sheets or foils of about one or several hundred micron used as substrates are anodized. The counter electrode is an Pt-wire. As electrolyte, a vigorously stirred 0,4M H₃PO₄ solution is used. Preferably, in the beginning of the anodizing process the applied voltage is augmented continuously with a growth rate of about 200 mV/sec until the final potential is reached. During this tensiodynamic stage of the process the anodizing current rises strongly when starting and remains almost constant until the breakdown voltage is reached, as is shown for different electrolyte concentration and temperature in Fig. 1. Because of the slow growing of the tension applied, various geometrical substrate forms can be used without voltage breakdown in the cell. The optimum potential is about 160V. However, a voltage less than 160 V can be applied. This voltage is held constant during anodizing.

In Fig. 2, the typical course of the anodizing current in the tensiostatic stage at the final voltage is shown. The two plots represent different final potentials. The plot's minimum represents the beginning of the formation of the porous structure. During this tensiostatic stage of the anodizing process, the porous structure is growing almost linearly with the charge flown. The thickness also strongly depends on the electrolyte concentration and temperature.

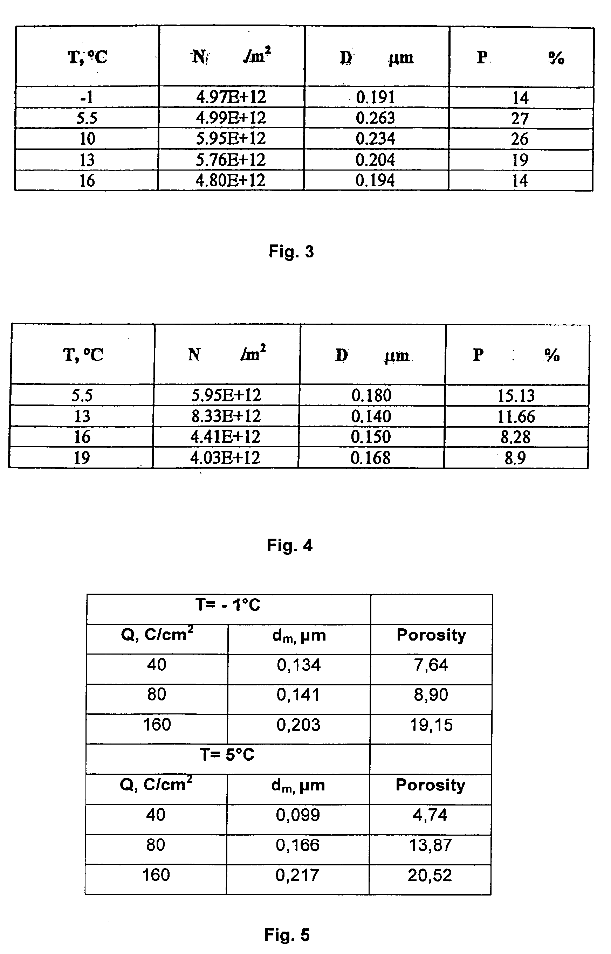

Good results have been reached with a constant electrolyte temperature of about 5°C with 0,4M H₃PO₄. Fig. 3 and 4 show tables with experimental results as a function of the bath temperature in different electrolyte concentrations giving number of pores, their average dimension and the porosity.

After the anodizing, the porous layer is detached. This can be performed by a step-by-step reduction of the potential or a selective chemical dissolution of aluminium substrate.

Finally, the obtained alumina samples are dried at about 40°C. Thereafter, a chemical etching process is performed in 0,4M H₃PO₄.

The efficiency in the production of membranes of a thickness between 20 and 50 micron and the morphological structure depend on the concentration of the solution and the temperature of the bath.

In the following, a detailed example is described. For the preparation of porous membranes even aluminium foils, that have a high crystallographic orientation along the sides with Miller index (111), can be used. They are aluminium foils annealed by a suitable thermal process at a temperature ranging between preferably 480°C and 550°C for a time ranging from about 10 to 30 hours leading to the desired recrystallization. Using these types of recrystallized material, the self ordering of the porous oxide film is highly influenced by the metal structure used as a substratum.

Membranes are prepared starting by this annealed aluminium foil on which an electro-polishing process is carried out.

The porous oxide has been carried out at a temperature ranging from -1 to +10°C. The oxide growth has been realized in phosphoric acid with a concentration ranging between 0,1 and 0.6 M. Using the annealed material a big difference of layer morphology can be observed. At a charge density applied to the membrane of 80 Coulomb/cm² there are pores sizing about 140 nanometers, while at 160 coulomb/cm² the pores are sizing about 200 nanometers. Generally, the average pore diameter is highly increasing with the charge density, as shown in the table according to Fig. 5.

The charge density dₘ increase implies also a porosity growth, as can always be seen from Fig. 5. The choice of the recrystallized substratum allows to tailor the most suitable membrane for the fuel cell applications. Accordingly, with the above procedure, alumina membranes can be manufactured that are highly inert and therefore usable in fuel cells, for example.

An inorganic membrane for a fuel cell has been prepared by starting from annealed aluminium having an estimated geometrical porosity of about 20% with a thickness in the order of 60 micron and pore diameter in the range from 150 nm to 250 nm.

The pores of membranes have been filled, by using different procedures, with an inorganic proton conductor salt of formula near to CsHS₂O₄. Different filling procedures were used starting with aqueous solution of CsHs₂O₄.

A membrane electrode assembly was prepared by using a composite alumina membrane, filled with proton conductor, and two electrodes made of commercial electrocatalytic carbon paste containing noble metal particles (Pt). The electrodes were prepared by depositing on commercial carbon paper carbon paste containing Pt metal powder in a concentration of about 30% giving a catalyst loading of about 1.8 mgr/cm².

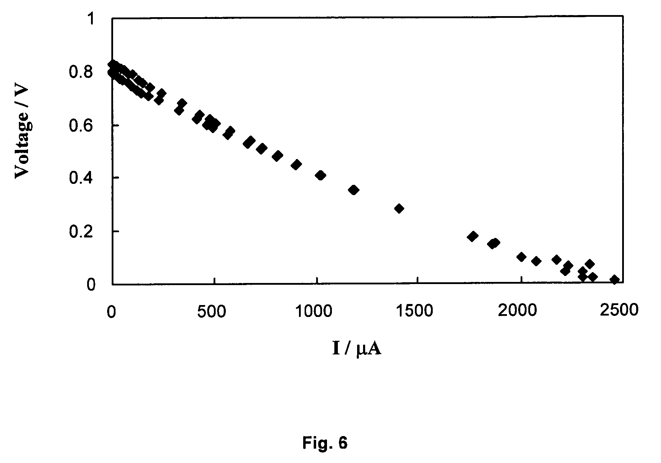

After having filled the membrane electrode, the cell has been heated at a temperature of 160°C. Hydrogen and oxide have been made flowing to the following pressures: 3 bar for the oxygen, 1 bar for hydrogen. After one hour, the open circuit voltage reaches 0,82V. The reported curve according to Fig. 6 shows a short circuit current equal to 2460 µA. At the end of recording the open circuit voltage is 0,8V.

Accordingly, the process according to the present invention is well suited for manufacturing alumina membranes for fuel cells.

## Claims

1. Process for manufacturing a porous body, in particular suitable as a membrane, e.g. for use in a fuel cell, with the following steps:
a) providing a thin substrate having the geometrical base of the body which is to be produced,
b) providing an alumina film by an electrochemical process on the substrate,
c) separation of the substrate from the alumina film, and
d) drying and chemical etching of the alumina film,
**characterized in that** the substrate used is made of recrystallized material.

2. Process according to claim 1, wherein the substrate is made of annealed aluminium foil.

3. Process according to claim 2, wherein annealing of the aluminium foil was processed at a temperature between about 450°C and about 600°C and a for a time between about 5 to about 35 hours.

4. Process according to one or more of claims 1 to 3, **characterized by** a galvanic bath for electrochemical deposition of alumina on the substrate, preferably with a bath temperature within a range of about -1°C to about 20°C.

5. Process according to one or more of claims 1 to 4, wherein the bath temperature is hold constant during alumina deposition on the substrate.

6. Process according to one or more of claims 1 to 5, wherein the bath includes a phosphoric acid with a concentration between 0,1 M and 0,6 M.

7. Process according to one or more of claims 1 to 6, wherein the charge density is up to about 180 C/cm², preferably between 80 C/cm2 and 160 C/cm².

8. Process according to one or more of claims 1 to 7, wherein an anodizing voltage of up to 160 V is applied.

9. Process according to one or more of claims 1 to 8, **characterized by** a cleaning process of the substrate before anodizing, in particular by an alkaline bath process or an electro-polishing process.

10. Process according to one or more of claims 1 to 9, wherein the pores of the alumina film are filled with a material having high proton conductivity.

11. Membrane with a porous body, in particular for the use in fuel cells, **characterized in that** the porous body has been produced in a process according to one of claims 1 to 10.
